# EUROPEAN PATENT APPLICATION

(11) **EP 3 967 384 A1**
(43) Date of publication of application: **16.03.2022**
(21) Application number: 20831778.4
(22) Date of filing: 02.06.2020
(51) Int. Cl.: B01D 33/06, B01D 36/02, B23Q 11/00, B23Q 11/10, C02F 11/126

(54) **SLUDGE TREATMENT DEVICE AND SLUDGE TREATMENT SYSTEM WORK MACHINE**

(30) Priority: 24.06.2019 JP 2019116350
(71) Applicant: DMG Mori Co., Ltd., Yamatokoriyama-shi, Nara 639-1160 (JP)
(72) Inventor: FUNAKOSHI, Genki, Yamatokoriyama-shi, Nara 639-1160 (JP); KITADE, Yuhei, Yamatokoriyama-shi, Nara 639-1160 (JP)
(74) Representative: Isarpatent
(86) International application number: PCT/JP2020/021789
(87) International publication number: WO 2020/261896

(57) **Abstract**

There are provided a sludge treatment device 100 and a sludge treatment system 400 comprising: a primary tank 110 into which a liquid flows from a machine tool 300 side; a secondary tank 120 from which a liquid inside flows out to the machine tool 300 side; a first flow path 130 that supplies the liquid in the primary tank 110 to the secondary tank 120 ; a filter 134 disposed on the first flow path 130; a second flow path 140 different from the first flow path 130 connecting the primary tank 110 and the secondary tank 120; and a liquid inflow amount adjustment means 142 configured to adjust an inflow amount of liquid flowing from the secondary tank 120 into the primary tank 110 through the second flow path 140 , wherein a second flow path liquid supply path 150 is provided to cause the liquid in the primary tank 110 to flow from the secondary tank 120 side toward the primary tank 110 side from a middle of the second flow path 140.

## Description

### Technical Field

The present disclosure relates to a treatment device of sludge included in a coolant used in a machine tool and a sludge treatment system including the sludge treatment device.

### Background Art

In a machine tool, a coolant (cutting liquid) is used for lubrication and cooling between a workpiece and a tool. An object to be removed such as chips and fine particles is mixed in the coolant discharged from the machine tool. In order to remove this, a treatment device including a scraper conveyor for scraping up chips in a coolant and a drum filter for filtering the coolant is widely used. Among them, one having a plurality of drum filters to enhance the filtration performance is proposed (see, for example, Patent Literature 1).

### Citation List

### Patent Literature

Patent Literature 1: JP 2019-51460 A

### Summary of Invention

### Technical Problem

However, as in the treatment device described in Patent Literature 1, the filtration performance based on only filtration using the drum filter is limited as obvious, and it is difficult to remove fine sludge. Accordingly, when the coolant containing fine sludge is returned to the machine tool side and reused, problems such as nozzle clogging may occur. On the other hand, when a complicated and large waste liquid treatment facility is provided to remove fine sludge, equipment cost and running cost increase.

An object of the present disclosure is to provide a sludge treatment device and a sludge treatment system which can remove fine sludge in a liquid with a simple structure. Solution to Problem

In order to solve the above problem, a sludge treatment device according to one aspect of the present disclosure includes a primary tank into which a liquid flows from a machine tool side, a secondary tank from which a liquid inside flows out to the machine tool side, a first flow path that supplies the liquid in the primary tank to the secondary tank, a filter disposed on the first flow path, a second flow path different from the first flow path connecting the primary tank and the secondary tank, and a liquid inflow amount adjustment means configured to adjust an inflow amount of liquid flowing from the secondary tank into the primary tank through the second flow path.

A sludge treatment system according to one aspect of the present disclosure includes the above sludge treatment device, a machine side tank installed on a machine tool side, a drum filter disposed in the machine side tank, and a primary tank supply pump that supplies a liquid in the machine side tank which has passed through the drum filter to the primary tank.

### Advantageous Effects of Invention

According to the above aspects, it is possible to provide a sludge treatment device and a sludge treatment system which can remove fine sludge in a liquid with a simple structure.

### Brief Description of Drawings

FIG. 1 is a diagram schematically showing a sludge treatment system according to one embodiment of the present disclosure.
FIG. 2A is a side sectional view schematically showing a state of a machine side tank in a conventional coolant treatment system including only the machine side tank.
FIG. 2B is a side sectional view schematically showing a state of the drum filter and the scraper conveyor of the machine side tank shown in FIG. 2A.
FIG. 3A is a side sectional view schematically showing a state of a machine side tank in a sludge treatment system according to one embodiment including a machine side tank and a sludge treatment device.
FIG. 3B is a side sectional view schematically showing a state of the drum filter and the scraper conveyor of the machine side tank shown in FIG. 3A.
FIG. 4 is a block diagram showing the control unit of the sludge treatment device according to one embodiment of the present disclosure.
FIG. 5 is a flowchart illustrating an example of control processing in a liquid inflow amount adjustment means control unit.
FIG. 6 is a diagram schematically showing a sludge treatment system according to another embodiment of the present disclosure.
FIG. 7 is a block diagram illustrating the control unit of the sludge treatment device according to another embodiment of the present disclosure.

### Description of Embodiments

Embodiments for carrying out the present disclosure will be described below with reference to the accompanying drawings. It is noted that the embodiments described below are intended to embody the technical idea of the present disclosure, and the present disclosure is not limited to the following unless otherwise specified.

In the drawings, members having the same function may be denoted by the same reference numerals. In consideration of the description of the main points or ease of understanding, the embodiments may be illustrated separately for convenience, but partial replacement or combination of configurations illustrated in different embodiments is possible. In the embodiments to be described later, descriptions of matters common to the above embodiments will be omitted, and only different points will be described. In particular, the same operation and effect by the same configuration will not be sequentially mentioned for each embodiment. The sizes, positional relationships, and the like of the members illustrated in the drawings may be exaggerated for clarity of description.

In the drawings, the flows of liquid flowing in the flow paths are indicated by the arrows.

### (Sludge treatment system)

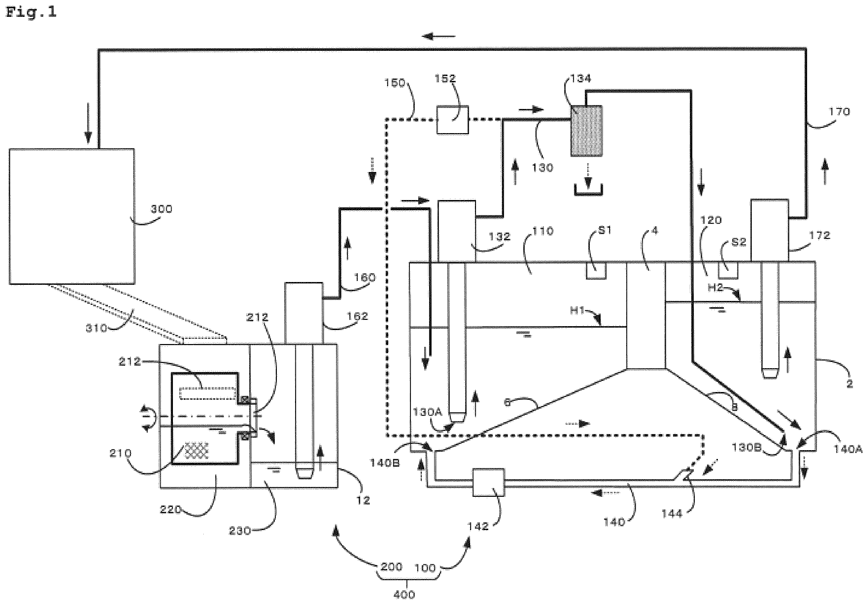

A sludge treatment system according to one embodiment of the present disclosure will be described first with reference to FIG. 1. FIG. 1 is a diagram schematically showing a sludge treatment system according to one embodiment of the present disclosure. A sludge treatment system 400 according to the present embodiment includes a machine side tank 200 and a sludge treatment device 100.

The coolant used for cutting or grinding in a machine tool 300 flows into the machine side tank 200 via a conveyor 310 together with chips. In the machine side tank 200, a coolant including chips is temporarily stored and filtered by a drum filter 210, and the filtered coolant is sent to the sludge treatment device 100 using a primary tank supply pump 162.

The sludge treatment device 100 performs treatment for removing sludge contained in the coolant sent from the machine side tank 200, and returns the treated coolant to the machine tool 300. The coolant returned to the machine tool 300 is used again for cutting and repeats such a circulation cycle. In the following description, the coolant flowing through the machine side tank 200 and the sludge treatment device 100 is referred to as a liquid.

### (Machine side tank)

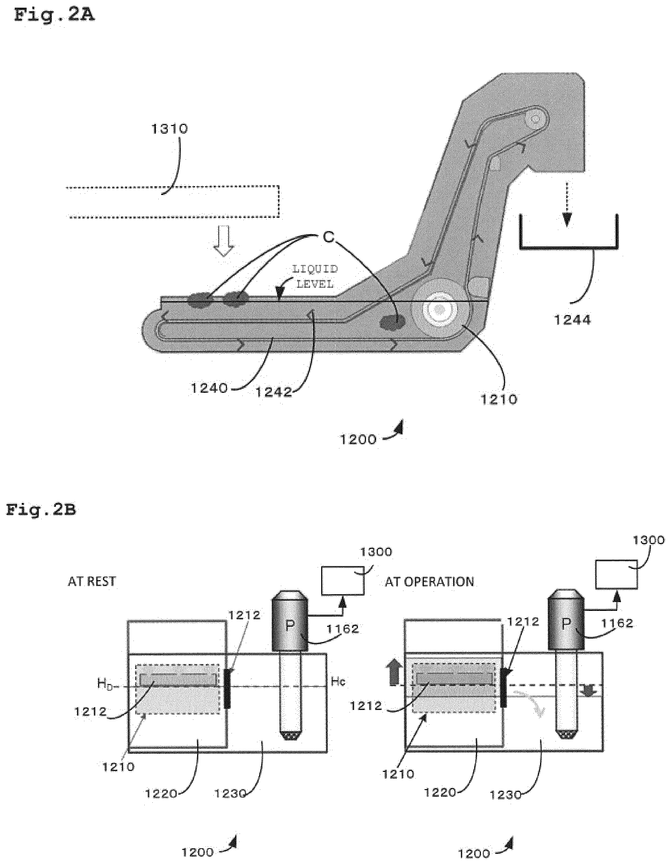

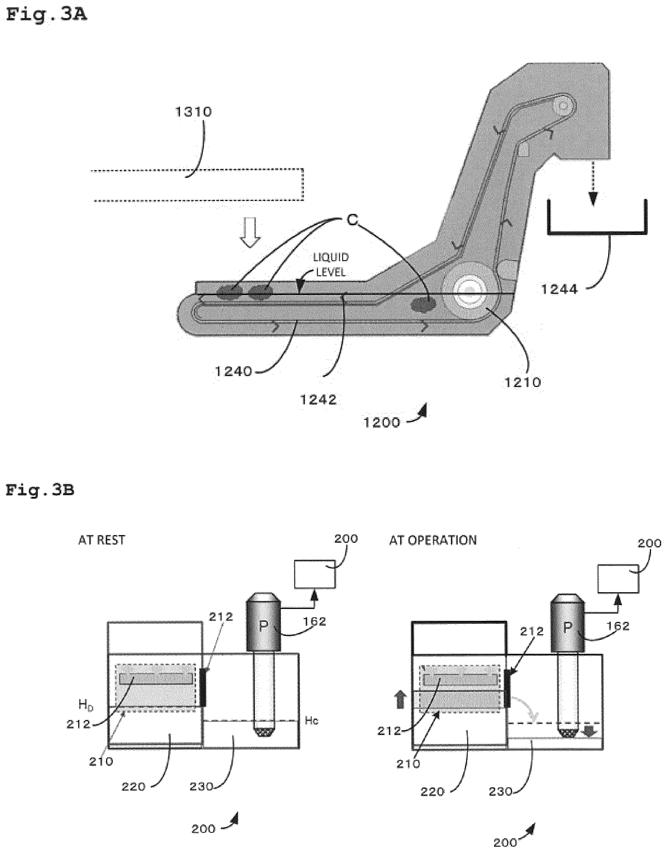

The machine side tank 200 according to one embodiment will be described with reference to FIGS. 2A, 2B, 3A, and 3B in addition to FIG. 1 while being compared with the prior art. FIG. 2A is a side sectional view schematically showing a state of a machine side tank in a conventional coolant treatment system including only the machine side tank. FIG. 2B is a side sectional view schematically showing a state of the drum filter and the scraper conveyor of the machine side tank shown in FIG. 2A. FIG. 3A is a side sectional view schematically showing a state of a machine side tank in a sludge treatment system according to one embodiment including a machine side tank and a sludge treatment device. FIG. 3B is a side sectional view schematically showing a state of the drum filter and the scraper conveyor of the machine side tank shown in FIG. 3A.

The machine side tank 200 according to the present embodiment includes a pre-filtration storage unit 220 in which the liquid sent from the machine tool 300 is stored and a post-filtration storage unit 230 in which the liquid filtered by the drum filter 210 is stored. A scraper conveyor 240 is disposed in the pre-filtration storage unit 220, and a scraper 242 captures a removal target object C such as chips conveyed together with a liquid and conveys the object to a disposal box 244 by the conveyor for disposal. The drum filter 210 also functions as a conveyor wheel of the scraper conveyor 240. The filtered liquid stored in the post-filtration storage unit 230 is sent to the sludge treatment device 100 by the primary tank supply pump 162.

A conventional machine side tank 1200 also has substantially the same configuration as that of the machine side tank 200 according to the present embodiment. However, the conventional machine side tank 1200 is configured to return the liquid filtered by the drum filter 1210 directly to a machine tool 1300. Accordingly, the liquid circulated for use in the machine tool 1300 basically needs to be stored in the machine side tank 1200. Accordingly, as shown in FIGS. 2A and 2B, the liquid level of the liquid in the machine side tank 1200 is always high.

Therefore, many regions of the outer peripheral surface of a drum filter 1210 are located below the liquid level. For this reason, when the liquid is discharged from a backwashing nozzle 1212 to backwash the drum filter 1210, the removal of the attached substance on the filtration surface becomes insufficient in many regions immersed in the liquid, and the filtration performance deteriorates.

Furthermore, since the liquid level in the machine side tank 1200 is high, the removal target object C such as chips floating near the liquid level of the liquid is located above a scraper 1242 of a scraper conveyor 1240. Accordingly, it is difficult for the scraper 1242 to capture the removal target object C. Therefore, the amount of removal target object C such as chips increases in the machine side tank 1200, and the operation becomes difficult with the lapse of time.

On the other hand, in the machine side tank 200 according to the present embodiment, the liquid filtered by the drum filter 210 is sent to the sludge treatment device 100 side by the primary tank supply pump 162. That is, in the sludge treatment system 400 according to the present embodiment, the liquid circulated for use in the machine tool 300 can be stored not only in the machine side tank 200 but also in the sludge treatment device 100. Therefore, as shown in FIGS. 3A and 3B, in the machine side tank 200 according to the present embodiment, the liquid level of the liquid can be lowered.

As a result, a larger region of the outer peripheral surface of the drum filter 210 can be positioned above the liquid level of the liquid. Accordingly, when the liquid is discharged from a backwashing nozzle 212 and backwashing of the drum filter 210 is performed, much of the liquid for backwashing can be caused to flow out from the filtration surface into the atmosphere, so that the substance attached on the filtration surface can be more effectively removed. This makes it possible to suppress the deterioration of filtration performance.

Further, since the liquid level of the coolant in the machine side tank 200 is low, the removal target object C such as chips floating near the liquid level of the liquid can be captured by the scraper 242 of the scraper conveyor 240. This makes it possible to sufficiently remove the removal target object C such as chips that has entered the machine side tank 200 together with the liquid.

In particular, in the sludge treatment system 400 according to the present embodiment, the amount of liquid that can be stored in a primary tank 110 and a secondary tank 120 provided in the sludge treatment device 100 is larger than the amount of liquid that can be stored in the machine side tank 200. This makes it possible to reliably lower the liquid level of the liquid in the machine side tank 200.

In the present embodiment, the liquid is filtered by the drum filter 210, but the present invention is not limited thereto. The liquid can be filtered using any known filter or filtration device.

### (Sludge treatment device according to one embodiment)

The sludge treatment device according to one embodiment of the present disclosure will be described next with reference to FIG. 1. In the sludge treatment device 100, a main body 2 for storing liquid is partitioned by a partition portion 4 to form the primary tank 110 into which liquid flows from the machine tool 300 side and the secondary tank 120 from which liquid inside flows out to the machine tool 300 side. The sludge treatment device 100 further includes a first flow path 130 for supplying liquid in the primary tank 110 to the secondary tank 120.

More specifically, the liquid in the machine side tank 200 is supplied to the primary tank 110 via a primary tank supply flow path 160 by the primary tank supply pump 162. The liquid in the primary tank 110 is supplied to the secondary tank 120 via the first flow path 130 by the first flow path pump. The liquid in the secondary tank 120 is returned to the machine tool 300 via a return flow path 170 by a return pump 172.

The liquid supplied from the machine side tank 200 to the primary tank 110 is filtered by the drum filter 210, but contains fine sludge and the like. When the liquid is returned to the machine tool 300 as it is, nozzle clogging or the like may occur. Therefore, in the present embodiment, a filter 134 is provided on the first flow path 130 that supplies the liquid in the primary tank 110 to the secondary tank 120. In the present embodiment, a cyclone filter is used as the filter 134. The filter 134 removes fine sludge contained in the liquid and supplies a clean liquid to the secondary tank 120. The clean liquid in the secondary tank 120 is returned to the machine tool 300 via the return flow path 170.

The filter 134 used in the present embodiment is not limited to the cyclone filter, and any known filter that can remove fine sludge can be adopted.

As described above, the filter 134 disposed on the first flow path 130 can remove the fine sludge contained in the liquid in the primary tank 110 and supply the filtered liquid to the secondary tank 120. However, finer sludge passing through the mesh of the filter 134 may flow into the secondary tank 120. When such a liquid flows out from the secondary tank 120 to the machine tool 300 side, the possibility of clogging the nozzle or the like of the machine tool 300 cannot be denied.

At this time, it is considered that the finer sludge that has passed through the filter 134 gradually aggregates in the secondary tank 120. It is considered that the flocculated sludge is accumulated in the lower portion of the secondary tank 120 by gravity. Such flocculated sludge is considered to have a size that can be removed by the filter 134.

Accordingly, in the present embodiment, the liquid in the lower portion in the secondary tank 120 can be returned to the primary tank 110 using a second flow path 140 different from the first flow path 130 connecting the primary tank 110 and the secondary tank 120. This makes it possible to return the flocculated sludge accumulated in the lower portion existing in the secondary tank 120 to the primary tank 110. The flocculated sludge returned to the primary tank 110 is sucked again into the first flow path 130 together with the liquid and removed by the filter 134 in the first flow path 130. Repeating this cycle can reduce the amount of finer sludge in the liquid and prevent clogging of nozzles and the like in the machine tool 300.

The sludge treatment device 100 according to the present embodiment includes a liquid inflow amount adjustment means 142 that adjusts the inflow amount of liquid flowing from the secondary tank 120 into the primary tank 110 through the second flow path 140. In this case, as the liquid inflow amount adjustment means 142, an on-off valve that opens and closes the second flow path 140 by a signal from the control unit is used. When the on-off valve (liquid inflow amount adjustment means) 142 is opened in a state in which a liquid level H2 of the secondary tank 120 is higher than a liquid level H1 of the primary tank 110, the liquid can be returned from the secondary tank 120 to the primary tank 110 by a so-called siphon principle. This makes it possible to reliably return the flocculated sludge accumulated in the lower portion in the secondary tank 120 to the primary tank 110.

As described above, it is possible to implement the sludge treatment device 100 that can remove fine sludge in a liquid with a simple structure.

As described above, when the liquid inflow amount adjustment means 142 is an on-off valve that opens and closes the second flow path 140, the on-off valve (liquid inflow amount adjustment means) 142 is opened in a state in which the liquid level H2 of the secondary tank 120 is higher than the liquid level H1 of the primary tank 110. This can reliably return the flocculated sludge accumulated in the lower part in the secondary tank 120 to the primary tank 110.

The sludge treatment device 100 according to the present embodiment is provided with a primary tank level meter S1 that detects the liquid level H1 of the primary tank 110 and a secondary tank level meter S2 that detects the liquid level H2 of the secondary tank 120.

It is conceivable that most of the flocculated sludge present in the secondary tank 120 is accumulated in the lower portion of the secondary tank 120. However, in the present embodiment, since the second flow path 140 is connected to the lower portion of the secondary tank 120, such flocculated sludge can be efficiently returned to the primary tank 110.

Further, in the present embodiment, a bottom surface 8 of the secondary tank 120 is an inclined surface. As a result, the precipitated flocculated sludge is likely to gather in a lower region of the inclined bottom surface 8 due to gravity. In the present embodiment, since an inlet 140A of the second flow path 140 is disposed in the lower region of the inclined bottom surface 8, the flocculated sludge easily flows into the first flow path 130 together with the liquid.

Further, an outlet 130B of the first flow path 130 to which the liquid having passed through the filter 134 is supplied is disposed in the lower region of the inclined bottom surface 8. Accordingly, the flocculation sludge is easily formed in the lower region of the inclined bottom surface 8.

In the present embodiment, the bottom surface 8 of the secondary tank 120 is an inclined surface. However, the present invention is not limited thereto. When at least a part of the bottom surface 8 of the secondary tank 120 has a region where the level decreases toward the inlet 140A of the second flow path 140, the flocculated sludge easily flows into the first flow path 130. This makes it possible to reliably return the flocculated sludge accumulated in the lower portion in the secondary tank 120 to the primary tank 110 via the second flow path 140.

As is obvious from FIG. 1, in the present embodiment, the second flow path 140 is connected to the lower portion of the primary tank 110. Accordingly, the flocculated sludge returning to the primary tank 110 can be effectively sucked into the first flow path 130 and removed by the filter 134. In particular, an inlet 130A of the first flow path 130 is preferably disposed near an outlet 140B of the second flow path 140.

Further, a bottom surface 6 of the primary tank 110 is also an inclined surface, and the outlet 140B of the second flow path 140 is disposed in a lower region of the inclined bottom surface 6.

Furthermore, in the present embodiment, a Y-shaped joint 144 is provided in the middle of the second flow path 140, to which a second flow path liquid supply path 150 into which the liquid in the primary tank 110 flows is connected. The Y-shaped joint 144 is attached in an inclined state so as to inject a liquid from the secondary tank 120 toward the primary tank 110. In the present embodiment, the second flow path liquid supply path 150 is branched from and connected to the first flow path 130. The second flow path liquid supply path 150 is provided with an on-off valve 152 that opens and closes the second flow path liquid supply path 150 based on a signal from the control unit.

When the on-off valve 152 is opened, part of the liquid in the primary tank 110 discharged by the first flow path pump 132 flows through the second flow path liquid supply path 150 and flows from the secondary tank 120 toward the primary tank 110 from the middle of the second flow path 140.

This generates a so-called ejector effect and can promote the flow from the secondary tank 120 to the primary tank 110 in the second flow path 140. This makes it possible to more effectively return the flocculated sludge accumulated in the lower portion in the secondary tank 120 to the primary tank 110.

In particular, when the level difference between the liquid level H1 in the primary tank 110 and the liquid level H2 in the secondary tank 120 is small and the flow in the second flow path 140 according to the principle of siphon is weak, the flow in the second flow path 140 can be promoted by applying an ejector effect by the second flow path liquid supply path 150. Control processing related to these will be described in detail later.

In the present embodiment, the second flow path liquid supply path 150 is branched from and connected to the first flow path 130. However, the present invention is not limited thereto. The present invention can also be provided with an individual flow path including a pump dedicated to the second flow path liquid supply path 150. Even in this case, a large ejector effect can be obtained only by using a very small pump.

### (Control unit)

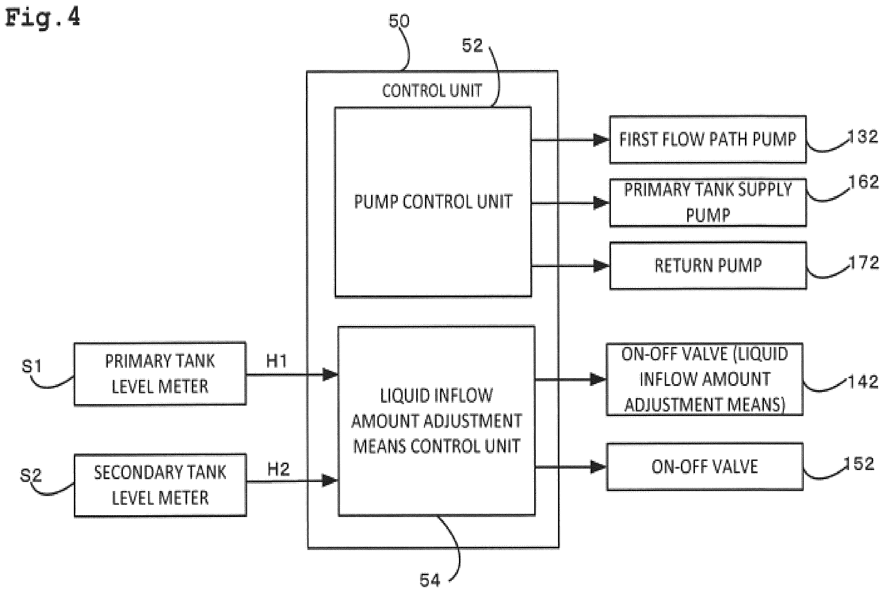

The control unit of the sludge treatment device according to one embodiment of the present disclosure will be described next with reference to FIG. 4. FIG. 4 is a block diagram showing the control unit of the sludge treatment device according to one embodiment of the present disclosure. A control unit 50 of the sludge treatment device 100 includes a pump control unit 52 that controls the first flow path pump 132, the primary tank supply pump 162, and a return pump 172 and a liquid inflow amount adjustment means control unit 54 that controls the flow rate in the second flow path 140.

The liquid inflow amount adjustment means control unit 54 controls the on-off valve (liquid inflow amount adjustment means) 142 and the on-off valve 152 based on, for example, signals received from the primary tank level meter S1 that detects the liquid level H1 in the primary tank 110 and the secondary tank level meter S2 that detects the liquid level H2 in the secondary tank 120.

### (Example of inflow amount adjustment process)

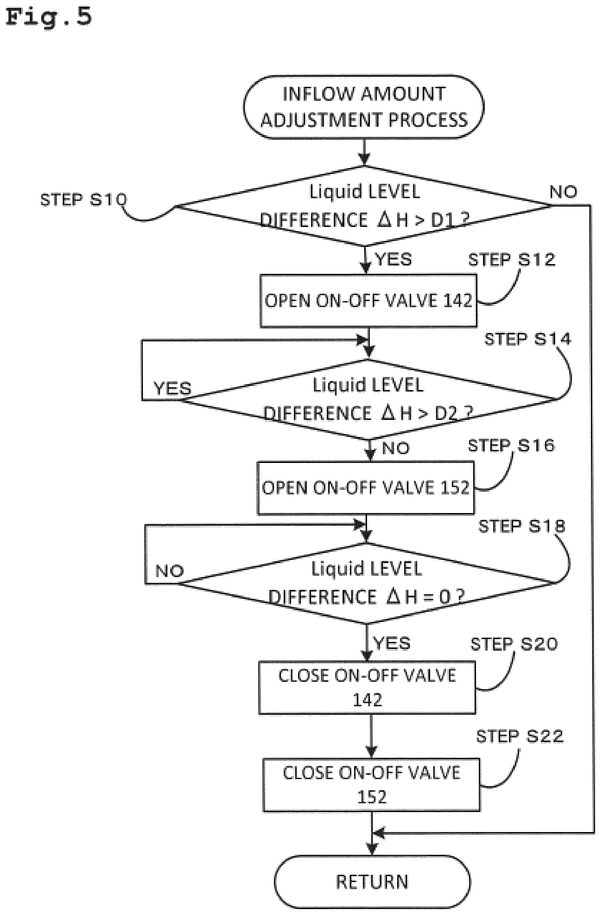

An example of control processing by the liquid inflow amount adjustment means control unit 54 will be described next with reference to FIG. 5. FIG. 5 is a flowchart illustrating an example of control processing in a liquid inflow amount adjustment means control unit. In this flowchart, the liquid inflow amount adjustment means control unit 54 performs control for adjusting the liquid inflow amount in the second flow path 140 based on the liquid level H1 of the primary tank 110 and the liquid level H2 of the secondary tank 120.

The liquid inflow amount adjustment means control unit 54 always receives a signal related to the liquid level H1 of the primary tank 110 from the primary tank level meter S1 and receives a signal related to the liquid level H2 of the secondary tank 120 from the secondary tank level meter S2. Based on the received signal, ΔH = H2 - H1, which is the difference in liquid level, is always calculated. The calculated value of ΔH sequentially changes due to fluctuations in the liquid level of the primary tank 110 and the secondary tank 120.

The liquid inflow amount adjustment means control unit 54 first determines whether the head difference ΔH is larger than the first reference value D1 (step S12). Here, the first reference value D1 indicates a reference head difference for determining whether the liquid reliably flows from the secondary tank 120 to the primary tank 110 in the first flow path 130.

If it is determined in the determination of step S10 that a head difference ΔH is equal to or less than a first reference value D1 (NO), this control process ends as it is. Upon determining in step S10 that the head difference ΔH is larger than the first reference value D1 (YES), the liquid inflow amount adjustment means control unit 54 sends a signal to the on-off valve (liquid inflow amount adjustment means) 142 to change the on-off valve (liquid inflow amount adjustment means) 142 from the closed state to the open state (S12). As a result, the liquid flows from the secondary tank 120 to the primary tank 110 in the first flow path 130 according to the principle of siphon.

It is then determined whether the head difference ΔH based on the signals from the level meters S1 and S2 is larger than a second reference value D2 (step S14). In this case, the second reference value D2 has a value larger than the first reference value D1 and indicates a reference head difference for determining whether or not it is necessary to assist the flow by the ejector effect.

Upon determining in the determination of step S14 that the head difference ΔH is equal to or less than the second reference value D2 (NO), the liquid inflow amount adjustment means control unit 54 sends a signal to the on-off valve 152 to change the on-off valve from the closed state to the open state (S16). As a result, the liquid in the primary tank 110 flows through the second flow path liquid supply path 150 and flows into the second flow path 140 from the middle of the second flow path 140. As a result, the flow of liquid in the second flow path 140 is promoted based on the ejector effect.

That is, when the head difference ΔH is not so large and the flow assistance by the ejector effect is required at the time point when the on-off valve (liquid inflow amount adjustment means) 142 is opened to start the flow of the liquid in the second flow path 140, the on-off valve 152 is opened from the beginning of the flow.

On the other hand, when it is determined in step S14 that the head difference ΔH is larger than the second reference value D2 (YES), that is, when there is the head difference ΔH by which a predetermined flow can be obtained without assistance by the ejector effect at the time of starting the flow of the liquid in the second flow path 140, this determination process is repeated. Then, when the liquid flows in the first flow path 130 from the secondary tank 120 to the primary tank 110, the head difference ΔH between the primary tank 110 and the secondary tank 120 decreases to a value equal to or less than the second reference value D2, the on-off valve 152 is opened to start assisting the flow of the liquid in the second flow path 140 by the ejector effect.

However, the present invention is not limited to this control process, and even when the head difference ΔH is larger than the second reference value D2, the on-off valve 152 can be opened to add assistance by the ejector effect. In this case, the liquid in the secondary tank can be returned to the primary tank 110 more quickly.

It is then determined whether the head difference ΔH has reached 0 (step S18). In this determination, when it is determined that ΔH has not yet reached 0 (NO), this determination processing is repeated. If it is determined in step S18 that the head difference ΔH has reached 0 (YES), the on-off valve (liquid inflow amount adjustment means) 142 is closed (step S20), the on-off valve 152 is closed (step S24), and the control process is terminated.

As described above, since the liquid inflow amount adjustment means control unit 54 controls opening and closing of the on-off valve (liquid inflow amount adjustment means) 142 and the on-off valve 152 based on the liquid level H1 of the primary tank 110 and the liquid level H2 of the secondary tank 120, it is possible to reliably return the flocculated sludge in the secondary tank 120 to the primary tank 110.

### (Another example of inflow amount adjustment process)

In the above example, the liquid inflow amount adjustment means control unit 54 performs control for adjusting the liquid inflow amount in the second flow path 140 based on the liquid level H1 of the primary tank 110 and the liquid level H2 of the secondary tank 120. However, the present invention is not limited thereto.

In the sludge treatment device 100, when the liquid is circulated to enter a steady state, it is considered that the liquid levels in the primary tank 110 and the secondary tank 120 change at certain time intervals. Therefore, the liquid inflow amount adjustment means control unit 54 can also perform control for adjusting the liquid inflow amount in the second flow path 140 based on the elapsed time without using the liquid levels of the primary tank 110 and the secondary tank 120.

That is, the liquid inflow amount adjustment means control unit 54 controls opening and closing of the on-off valve (liquid inflow amount adjustment means) 142 and the on-off valve 152 based on the elapsed time. At this time, when it is determined based on the signal from the pump control unit 52 that a steady operation is performed in the first flow path pump 132, the primary tank supply pump 162, and the return pump 172, control based on the elapsed time is performed. Furthermore, a plurality of control patterns based on the elapsed times are provided according to the operation patterns of the first flow path pump 132, the primary tank supply pump 162, and the return pump 172, and an optimum control pattern can be selected in accordance with the situation.

As described above, the liquid inflow amount adjustment means control unit 54 performs control for adjusting the liquid inflow amount in the second flow path 140 based on the elapsed time. This makes it possible to return the flocculated sludge in the secondary tank 120 to the primary tank 110 by simple control without requiring a special sensor or the like.

### (Other effects of second flow path)

Considering the circulation of liquid based on the state of cutting in the machine tool 300, in the sludge treatment device 100, the flow rate of liquid flowing in the first flow path 130 may be larger than the flow rate of liquid flowing from the secondary tank 120 to the machine tool 300 side by the return flow path 170. As described above, when the amount of liquid supplied to the secondary tank 120 via the first flow path 130 is larger than the amount of liquid flowing from the inside of the secondary tank 120 to the machine tool 300 side, the level of liquid in the secondary tank 120 increases. Accordingly, when a large amount of liquid is circulated, it is necessary to increase the capacity of the secondary tank 120. This makes it difficult to reduce the size of the sludge treatment device 100. However, in the present embodiment, the liquid in the secondary tank 120 can be returned to the primary tank 110 side using the second flow path 140, and the liquid level of the liquid in the secondary tank 120 can be lowered. This makes it possible to obtain substantially the same effect as that obtained by increasing the liquid capacity of the secondary tank 120 and downsize the sludge treatment device 100.

### (Sludge treatment device according to another embodiment)

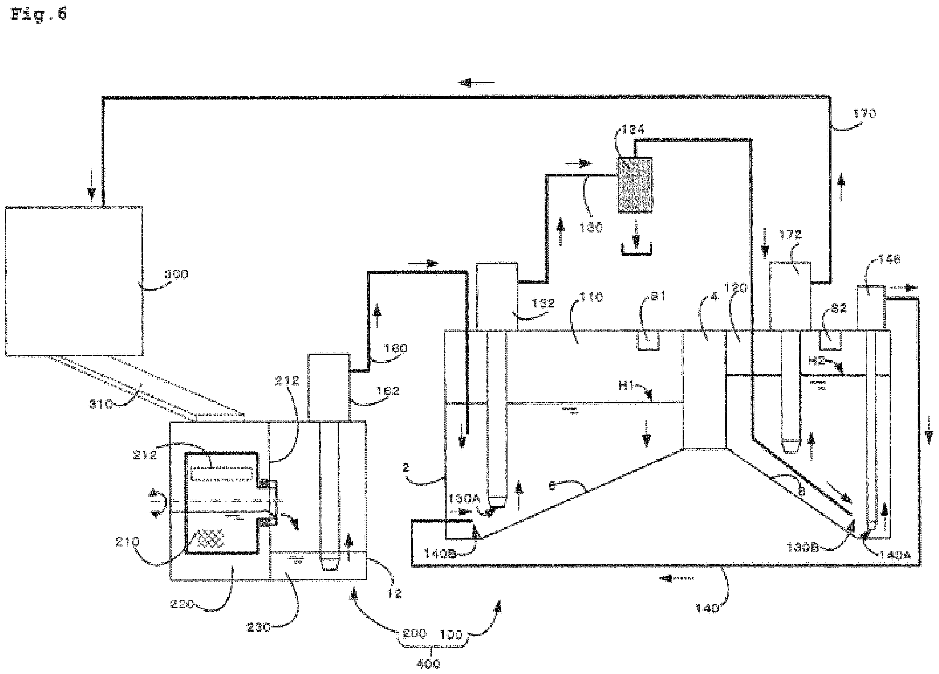

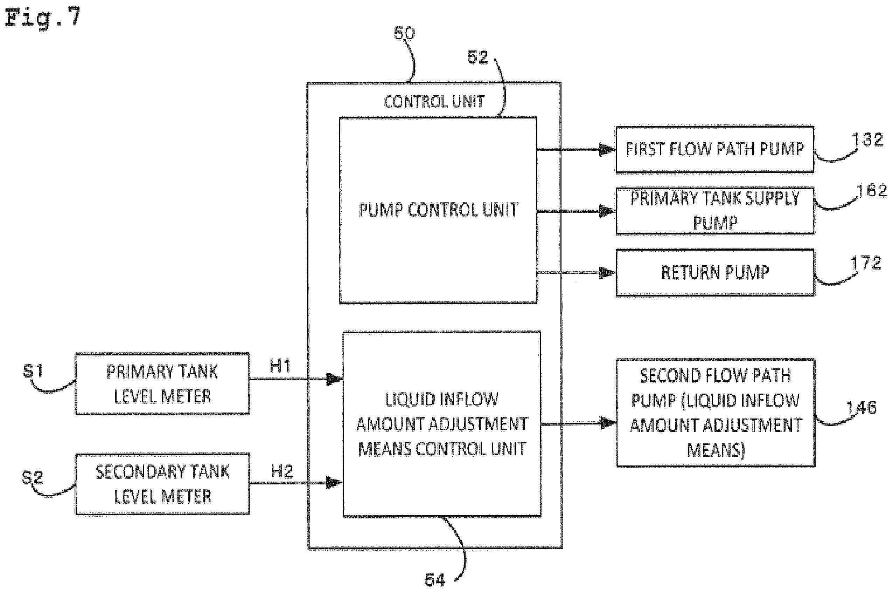

A sludge treatment device according to another embodiment of the present disclosure will be described with reference to FIGS. 6 to 7. FIG. 6 is a diagram schematically showing a sludge treatment system according to another embodiment of the present disclosure. FIG. 7 is a block diagram showing the control unit of the sludge treatment device according to another embodiment of the present disclosure.

In the present embodiment described above, the on-off valve 142 is provided as a liquid inflow amount adjustment means, and the flow of the second flow path 140 is formed using the principle of siphon. On the other hand, the present embodiment is different in that a second flow path pump 146 is provided as a liquid inflow amount adjustment means, and the flow of the second flow path 140 is formed by the discharge force of the second flow path pump (liquid inflow amount adjustment means) 146. The liquid flows from the secondary tank 120 to the primary tank 110 in the second flow path 140 by the second flow path pump (liquid inflow amount adjustment means) 146. At this time, the inlet (suction port of the pump) 140A of the second flow path 140 is disposed in the lower portion of the secondary tank 120 where flocculated sludge tends to accumulate.

In the present embodiment, since the liquid flows by the discharge force of the second flow path pump (liquid inflow amount adjustment means) 146, the liquid can flow from the secondary tank 120 to the primary tank 110 even in a state in which the liquid level H2 of the secondary tank 120 is not higher than the liquid level H1 of the primary tank 110. In the present embodiment, it is not necessary to provide the second flow path liquid supply path 150 that promotes the flow by the ejector effect.

The liquid inflow amount adjustment means control unit 54 according to the present embodiment controls driving of the second flow path pump (liquid inflow amount adjustment means) 146 instead of the on-off valve (liquid inflow amount adjustment means) 142 and the on-off valve 152. As a result, it is possible to return the flocculated sludge in the secondary tank 120 to the primary tank 110 while adjusting the liquid levels of the secondary tank 110 and the primary tank 120.

### (Other embodiments)

In the above embodiment, the main body 2 is partitioned by the partition portion 4 to form the primary tank 110 and the secondary tank 120. However, the present invention is not limited thereto. For example, the primary tank and the secondary tank may be separate members each having an individual main body. In this case, setting the installation position of the secondary tank higher than the installation position of the primary tank can easily obtain the flow of the liquid in the second flow path according to the principle of siphon.

Although the embodiments and aspects of the present disclosure have been described, the disclosure contents may change in details of the configuration, and combinations of elements, changes in order, and the like in the embodiments and the aspects can be implemented without departing from the scope and spirit of the claimed present disclosure. Reference Signs List

2 main body
4 partition portion
6 bottom surface of primary tank
8 bottom surface of secondary tank
100 sludge treatment device
110 primary tank
120 secondary tank
130 first flow path
130A inlet
130B outlet
132 first flow path pump
134 filter
140 second flow path
140A inlet
140B outlet
142 on-off valve (liquid inflow amount adjustment means)
144 Y-shaped joint
146 second flow path pump (liquid inflow amount adjustment means)
150 second flow path liquid supply path
152 on-off valve
160 primary tank supply flow path
162 primary tank supply pump
170 return flow path
172 return pump
200 machine side tank
210 drum filter
212 backwashing nozzle
220 pre-filtration storage unit
230 post-filtration storage unit
240 scraper conveyor
242 scraper
244 disposal box
300 machine tool
310 conveyor
400 sludge treatment system
1162 return pump
1200 machine side tank
1210 drum filter
1212 backwashing nozzle
1220 pre-filtration storage unit
1230 post-filtration storage unit
1240 scraper conveyor
1242 scraper
1244 disposal box
1300 machine tool
S1 primary tank level meter
S2 secondary tank level meter
C removal target object
H1, H2 liquid level

## Claims

1. A sludge treatment device comprising:
a primary tank into which a liquid flows from a machine tool side;
a secondary tank from which a liquid inside flows out to the machine tool side;
a first flow path that supplies the liquid in the primary tank to the secondary tank;
a filter disposed on the first flow path;
a second flow path different from the first flow path connecting the primary tank and the secondary tank; and
a liquid inflow amount adjustment means configured to adjust an inflow amount of liquid flowing from the secondary tank into the primary tank through the second flow path,
wherein a second flow path liquid supply path is provided to cause the liquid in the primary tank to flow from the secondary tank side toward the primary tank side from a middle of the second flow path.

2. The sludge treatment device according to claim 1, wherein the second flow path is connected to a lower portion of the secondary tank.

3. The sludge treatment device according to claim 2, wherein at least a portion of a bottom surface of the secondary tank has a region where a level decreases toward an inlet side of the second flow path.

4. The sludge treatment device according to claim 2 or 3, wherein the second flow path is connected to a lower portion of the primary tank.

5. The sludge treatment device according to any one of claims 2 to 4, wherein the liquid inflow amount adjustment means is an on-off valve that opens and closes the second flow path.

6. The sludge treatment device according to any one of claims 2 to 5, wherein a control unit of the liquid inflow amount adjustment means performs control for adjusting the liquid inflow amount based on an elapsed time.

7. The sludge treatment device according to any one of claims 2 to 5, wherein a control unit of the liquid inflow amount adjustment means performs control for adjusting the liquid inflow amount based on a liquid level of the primary tank and a liquid level of the secondary tank.

8. The sludge treatment device according to any one of claims 1 to 7, wherein a flow rate of liquid flowing in the first flow path is larger than a flow rate of liquid flowing from an inside of the secondary tank to the machine tool side.

9. A sludge treatment system comprising:
a sludge treatment device defined in any one of claims 1 to 8;
a machine side tank installed on a machine tool side;
a drum filter disposed in the machine side tank; and
a primary tank supply pump that supplies a liquid in the machine side tank which has passed through the drum filter to the primary tank.

10. The sludge treatment system according to claim 9, wherein amounts of liquid that can be stored in the primary tank and the secondary tank are larger than an amount of liquid that can be stored in the machine side tank.
